# EUROPEAN PATENT APPLICATION

(11) **EP 4 472 325 A1**
(43) Date of publication of application: **04.12.2024**
(21) Application number: 23758990.8
(22) Date of filing: 06.02.2023
(51) Int. Cl.: H04W 74/02

(54) **SCHEDULING METHOD, SYSTEM, AND DEVICE**

(30) Priority: 23.02.2022 CN 202210167775
(71) Applicant: Huawei Technologies Co., Ltd., Shenzhen, Guangdong 518129 (CN)
(72) Inventor: CHEN, Jindou, Shenzhen, Guangdong 518129 (CN); GAN, Shuang, Shenzhen, Guangdong 518129 (CN); SI, Xiaoshu, Shenzhen, Guangdong 518129 (CN)
(74) Representative: Pfenning, Meinig & Partner mbB
(86) International application number: PCT/CN2023/074646
(87) International publication number: WO 2023/160365

(57) **Abstract**

This application discloses a scheduling method, system, and apparatus, to provide a feasible manner to avoid a random backoff conflict over an air interface. The method includes: A control node receives service information separately reported by N network nodes, where the service information indicates information about service data that needs to be transmitted by the network node on a channel, and N is a positive integer. The control node determines, based on the service information separately reported by the N network nodes, M network nodes to be scheduled in a current scheduling cycle, where M is a positive integer. The control node sends a first scheduling message to the M network nodes, where the first scheduling message indicates that the M network nodes are allowed to perform channel contention.

## Description

This application claims priority to Chinese Patent Application No. 202210167775.2, filed with the China National Intellectual Property Administration on February 23, 2022 and entitled "SCHEDULING METHOD, SYSTEM, AND APPARATUS", which is incorporated herein by reference in its entirety.

### TECHNICAL FIELD

Embodiments of this application relate to the field of optical communication technologies, and in particular, to a scheduling method, system, and apparatus.

### BACKGROUND

Currently, in a wireless local area network (wireless local area network, WLAN), a wireless fidelity (wireless fidelity, Wi-Fi) channel is usually shared by an access point (access point, AP) and a station (station, STA). The AP and the STA each use a set of enhanced distributed channel access (enhanced distributed channel access, EDCA) parameters to contend for the Wi-Fi channel to obtain a sending opportunity.

The AP may adjust an EDCA parameter by determining a network status. However, with development of networks, there are more devices in a home network, and there is an increasing probability that a plurality of devices contend for a Wi-Fi channel at a same moment. If a plurality of devices contend for a Wi-Fi channel at a same moment, a random backoff conflict may occur, resulting in a packet sending failure, a reduced network throughput, and an increased service delay.

Therefore, it is worth studying how to avoid a random backoff conflict over an air interface to improve sending efficiency in a network.

### SUMMARY

Embodiments of this application provide a scheduling method, system, and apparatus, to provide a feasible manner to avoid a random backoff conflict over an air interface, and therefore improve network-wide sending efficiency in a network.

According to a first aspect, this application provides a scheduling method. The method includes: A control node receives service information separately reported by N network nodes, where the service information indicates information about service data that needs to be transmitted by the network node on a channel, and N is a positive integer. The control node determines, based on the service information separately reported by the N network nodes, M network nodes to be scheduled in a current scheduling cycle, where M is a positive integer, and M is less than or equal to N. The control node sends a first scheduling message to the M network nodes, where the first scheduling message indicates that the M network nodes are allowed to perform channel contention.

In the method, the control node in a network may implement centralized control on a plurality of network nodes, and may further decide, by collecting statistics on service information of the network nodes, a sequence in which the network nodes are allowed to send data. In this way, in the network, a network node scheduled by the control node in each scheduling cycle is allowed to perform channel contention in the current scheduling cycle to send data on a channel, and a network node that is not scheduled needs to wait for a scheduling result of a next scheduling cycle. Compared with a manner in which each network node freely performs channel contention in the conventional technology, in this method, a random backoff conflict over an air interface can be avoided, and each network node can implement sequential data sending under centralized control of the control node, so that network-wide sending efficiency in the network can be improved.

In a possible design, the method further includes: The control node receives first response messages separately reported by the M network nodes, where the first response message indicates that the network node wins a channel through contention. The control node determines, based on the first response messages and the service information separately reported by the N network nodes, P network nodes to be scheduled in a next scheduling cycle, where P is a positive integer, and P is less than or equal to N. The control node sends a second scheduling message to the P network nodes, where the second scheduling message indicates that the P network nodes are allowed to perform channel contention.

In this design, the control node may decide the scheduling result of the next scheduling cycle in a timely manner based on channel contention statuses of the M network nodes scheduled in the current scheduling cycle, so that the network-wide sending efficiency and performance can be improved under centralized scheduling control of the control node.

In a possible design, the method further includes: The control node updates service information of a network node in at least one of the following manners:
Manner 1: The control node receives second response messages separately reported by the M network nodes, where the second response message indicates service information for update by the network node before or after service data transmission of the current scheduling cycle is completed.
Manner 2: The control node receives updated service information separately and periodically reported by the N network nodes.

In this design, the control node may obtain a latest service status of the network node in a timely manner based on latest service information reported by the network node, so that a more accurate decision result can be obtained, and further the network-wide sending efficiency can be improved.

In a possible design, the service information includes but is not limited to at least one of the following information: a service type, service traffic, a service delay, and a service priority. That the control node determines, based on the service information separately reported by the N network nodes, M network nodes to be scheduled in a current scheduling cycle may be implemented as follows: If the service information separately reported by the N network nodes includes the service type, the control node determines priorities of the N network nodes based on the service type and a preconfigured service type priority. If the service information separately reported by the N network nodes includes the service traffic, the control node determines priorities of the N network nodes based on the service traffic. If the service information separately reported by the N network nodes includes the service delay, the control node determines priorities of the N network nodes based on the service delay. If the service information separately reported by the N network nodes includes the service priority, the control node determines priorities of the N network nodes based on the service priority. The control node determines, based on the priorities of the N network nodes, the M network nodes to be scheduled in the current scheduling cycle.

In this design, the control node may more accurately decide, based on the collected service information of the network nodes, a sequence of scheduling the network nodes, so that the network-wide sending efficiency in the network and network performance can be improved.

In a possible design, before the control node sends the first scheduling message to the M network nodes, the method further includes: If receiving a first request message reported by a first network node, or if determining that service information of a first network node further includes priority request information, the control node determines that the first network node requests to preferentially occupy a channel, where the first request message or the priority request information is used to request to preferentially occupy a channel to send or receive first data. After receiving a first indication message reported by the first network node, the control node enables scheduling in the current scheduling cycle, where the first indication message indicates that the first network node has sent or received the first data. Alternatively, after receiving a first indication message reported by the first network node, the control node enables scheduling of a second network node in the current scheduling cycle, where the second network node and the first network node meet a preset condition, and the preset condition includes the following information: the second network node and the first network node are on a same channel, and the first network node detects that signal strength of the second network node is greater than a specified threshold or the second network node detects that signal strength of the first network node is greater than the specified threshold.

In this design, in the network, a network node may be further designed to have a special requirement for preferentially requesting to occupy a channel. The control node may preferentially enable, based on the requirement of the network node, the network node that has the requirement for preferentially occupying a channel to perform service transmission on a channel in a timely manner, so that problems such as an increased delay and a reduced network throughput that are caused because the network node fails to process a service in a timely manner can be avoided, and further the network-wide performance can be improved.

In a possible design, the first scheduling message includes the following information: a network node identifier and scheduling enabling information. In this design, the control node performs centralized scheduling on network nodes, so that a problem of a conflict caused by free contention and random backoff of the network nodes can be avoided, and the network-wide sending efficiency can be improved.

In a possible design, the service information or the first scheduling message is sent in one of the following manners: a customized data frame, an ethernet frame, and an optical network terminal management and control interface OMCI protocol frame. In this design, a message exchanged between the control node and the network node may be implemented by using a newly added frame, or may be implemented by reusing an existing frame, so that the method provided in this application can be implemented, and the random backoff conflict over the air interface can be avoided.

According to a second aspect, an embodiment of this application provides a scheduling method. The method includes: A network node reports service information to a control node, where the service information indicates information about service data that needs to be transmitted by the network node on a channel. The network node receives a first scheduling message sent by the control node, where the first scheduling message indicates that the network node is allowed to perform channel contention. The network node performs channel contention based on the first scheduling message.

In a possible design, the method further includes: The network node reports a first response message to the control node, where the first response message indicates that the network node wins a channel through contention.

In a possible design, the method further includes: The network node updates the service information to the control node in at least one of the following manners:
Manner 1: The network node reports a second response message to the control node, where the second response message indicates service information for update by the network node before or after service data transmission of a current scheduling cycle is completed.
Manner 2: The network node periodically reports updated service information.

In a possible design, the service information includes at least one of the following information: a service type, service traffic, a service delay, and a service priority.

In a possible design, the method further includes: If detecting that there is to-be-sent or to-be-received first data, the network node reports a first request message to the control node, where the first request message is used to request to preferentially occupy a channel to send or receive the first data. Alternatively, if detecting that there is to-be-sent or to-be-received first data, the network node includes priority request information in the service information, where the priority request information is used to request to preferentially occupy a channel to send or receive the first data. After the network node has sent or received the first data, the network node reports a first indication message to the control node, where the first indication message indicates that the network node has sent or received the first data.

In a possible design, the first scheduling message includes the following information: a network node identifier and scheduling enabling information.

In a possible design, the service information or the first scheduling message is sent in one of the following manners: a customized data frame, an ethernet frame, and an OMCI protocol frame.

According to a third aspect, an embodiment of this application provides a scheduling system. The system includes a control node and N network nodes. The control node may perform the method provided in any possible design of the first aspect, and each network node may perform the method provided in any possible design of the second aspect.

According to a fourth aspect, an embodiment of this application provides a scheduling apparatus. The apparatus includes a transceiver unit and a processing unit. Functions performed by the transceiver unit and the processing unit may correspond to the steps of the control node in any possible design or implementation of the first aspect.

According to a fifth aspect, an embodiment of this application provides a scheduling apparatus. The apparatus includes a transceiver unit and a processing unit. Functions performed by the transceiver unit and the processing unit may correspond to the steps of the network node in any possible design or implementation of the second aspect.

According to a sixth aspect, an embodiment of this application further provides a network device. The network device includes one or more processors, the processor is coupled to a memory, the memory stores computer program code, and the computer program code includes computer instructions. The processor executes the computer instructions in the memory, to perform the method provided in any possible design of the first aspect. Optionally, the network device further includes a communication interface, and the processor is coupled to the communication interface. The communication interface may be a transceiver or an input/output interface. When the network device is a chip included in a network device, the communication interface may be an input/output interface of the chip. Optionally, the transceiver may be a transceiver circuit, and the input/output interface may be an input/output circuit.

According to a seventh aspect, an embodiment of this application further provides a network device. The network device includes one or more processors and a memory, the memory is coupled to the processor, the memory stores computer program code, and the computer program code includes computer instructions. The processor executes the computer instructions in the memory, to perform the method provided in any possible design of the second aspect. Optionally, the network device further includes a communication interface, and the processor is coupled to the communication interface. The communication interface may be a transceiver or an input/output interface. When the network device is a chip included in a network device, the communication interface may be an input/output interface of the chip. Optionally, the transceiver may be a transceiver circuit, and the input/output interface may be an input/output circuit.

According to an eighth aspect, an embodiment of this application further provides a wireless networking system. The system includes the network device provided in the sixth aspect and N network devices provided in the seventh aspect.

According to a ninth aspect, an embodiment of this application further provides a computer-readable storage medium. The computer-readable storage medium stores a computer program. When the computer program is executed by a computer, the method provided in any possible design of the first aspect is implemented, or the method provided in any possible design of the second aspect is implemented.

According to a tenth aspect, an embodiment of this application further provides a computer program product. The computer program product includes computer program code. When the computer program code is run by a processor of a network device, the network device is enabled to perform the method in any possible design of the first aspect, or the network device is enabled to perform the method in any possible design of the second aspect.

According to an eleventh aspect, an embodiment of this application further provides a chip. The chip is configured to read and execute a software program stored in a memory, to implement the method in any possible design of the first aspect or the method in any possible design of the second aspect. The memory may be connected to the chip, or the memory may be built in the chip.

For beneficial effect of any one of the second aspect to the eleventh aspect, specifically refer to the beneficial effect in the possible designs of the first aspect. Details are not described herein again.

### BRIEF DESCRIPTION OF DRAWINGS

FIG. 1 is a diagram of a possible WLAN network architecture according to an embodiment of this application;
FIG. 2 is a diagram of an EDCA parameter set according to an embodiment of this application;
FIG. 3 is a diagram of possible EDCA parameters configured on a STA side according to an embodiment of this application;
FIG. 4 is a diagram of possible channel contention according to an embodiment of this application;
FIG. 5A is a diagram of a topological structure of an optical communication system applied to FTTR according to an embodiment of this application;
FIG. 5B is a diagram of a topological structure of another optical communication system applied to a home network according to an embodiment of this application;
FIG. 6 is a schematic flowchart 1 of a possible scheduling method according to an embodiment of this application;
FIG. 7A is a schematic flowchart 2 of a possible scheduling method according to an embodiment of this application;
FIG. 7B shows an example of a first request message according to this application;
FIG. 7C shows an example of a first indication message according to this application;
FIG. 8 shows an example of a scheduling message according to this application;
FIG. 9 is a schematic flowchart 3 of a possible scheduling method according to an embodiment of this application;
FIG. 10 shows an example of a first response message according to this application;
FIG. 11 shows an example of a second response message according to this application;
FIG. 12A to FIG. 12E show examples of an ethernet frame according to an embodiment of this application;
FIG. 13 shows an example of an OMCI protocol frame according to an embodiment of this application;
FIG. 14 is a diagram of a structure of a scheduling apparatus according to an embodiment of this application;
FIG. 15 is a diagram of a structure of another scheduling apparatus according to an embodiment of this application; and
FIG. 16 is a diagram of a structure of a chip according to an embodiment of this application.

### DESCRIPTION OF EMBODIMENTS

It should be understood that "an embodiment", "an implementation", or "an example" mentioned in the entire specification means that particular features, structures, or characteristics related to embodiments are included in at least one embodiment of this application. Therefore, "in an embodiment", "in an implementation", or "in an example" appearing throughout the specification does not necessarily refer to a same embodiment. In addition, these particular features, structures, or characteristics may be combined in one or more embodiments in any appropriate manner. It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

In addition, terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. It should be understood that in embodiments of this application, "B corresponding to A" indicates that B is associated with A, and B may be determined based on A. However, it should be further understood that determining B based on A does not mean that B is determined based on only A, and B may alternatively be determined based on A and/or other information. In addition, unless otherwise stated, ordinal numbers such as "first" and "second" in embodiments of this application are for distinguishing between a plurality of objects, but are not intended to limit an order, a time sequence, priorities, or importance of the plurality of objects. In addition, terms "include" and "have" in embodiments of this application, the claims, and the accompanying drawings are not exclusive. For example, a process, a method, a system, a product, or a device that includes a series of steps or modules is not limited to the listed steps or modules, and may further include steps or modules that are not listed.

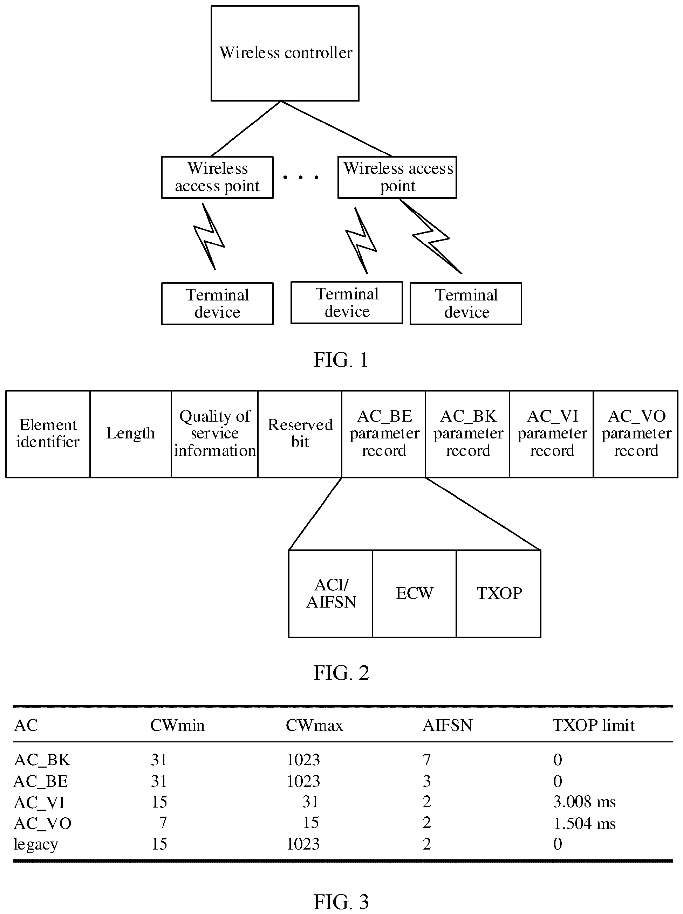

FIG. 1 is a diagram of a possible WLAN network architecture. The WLAN network architecture includes a wireless controller (which may also be referred to as a "control node" in embodiments of this application), a wireless access point (which may also be referred to as a "network node" in embodiments of this application), and a terminal device. The wireless controller is configured to perform service configuration and radio frequency configuration on the access point. The wireless access point may be briefly referred to as an access point (access point, AP). The AP is configured to provide service access for an associated STA. The terminal device may be associated with the access point as a STA.

The terminal device may include a mobile phone (or referred to as a "cellular" phone), a computer having a mobile terminal device, a portable, pocket-sized, handheld, or computer built-in mobile apparatus, or the like. For example, the terminal device may be a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device may alternatively be a computer, a tablet computer, an e-reader, or the like, or may be a smart home device, for example, a smart television or a smart speaker. By way of example, and not limitation, in embodiments of this application, the terminal device may alternatively be a wearable device. The wearable device may also be referred to as a wearable intelligent device, an intelligent wearable device, or the like, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

It should be noted that a Wi-Fi channel is shared by the AP and the STA. Currently, the AP and the STA each use a set of enhanced distributed channel access (enhanced distributed channel access, EDCA) parameters to contend for the Wi-Fi channel to obtain a sending opportunity. A configuration of the EDCA parameter is determined by the AP. Each AP configures an EDCA parameter of the AP, and broadcasts the EDCA parameter to each STA accessing the AP. A plurality of STAs accessing a same AP need to listen to a same set of EDCA parameters broadcast by the AP. The AP may broadcast the EDCA parameter by using a beacon (Beacon) frame. The beacon frame is a periodically triggered management frame defined in the 802.11 WLAN protocol. The beacon frame carries various types of necessary information in a network. The beacon frame includes an EDCA parameter set (parameter set) broadcast by the AP to the STA. The beacon frame may further include an EDCA parameter set used by the AP. An EDCA parameter set element (EDCA parameter set element) includes a quality of service (quality of service, QoS) parameter set. The QoS parameter set includes QoS parameters of the STA for different access categories (access categories, ACs). The access category may also be referred to as an access category. Access categories include: AC_BE (meaning best effort (best effort)), AC_BK (meaning background (background)), AC_VI (meaning video (video)), and AC_VO (meaning voice (voice)). QoS parameters of each access category (namely, configuration parameters for channel access) are, for example, a minimum size and a maximum size of an exponent form of contention window (exponent form of contention window, ECM), and a transmission opportunity (transmission opportunity, TXOP) limit. In this way, a different value is set for a QoS parameter of each access category, so that some real-time multimedia services (such as services of AC_VI and AC_VO types) can have more opportunities to access the channel. Therefore, a delay of the real-time multimedia service is reduced, data transmission of the real-time multimedia service is smoother, and user experience is improved.

For example, FIG. 2 shows an EDCA parameter set (parameter set) included in the beacon frame. An element identifier (element ID) is a unique identifier of an EDCA parameter set element, and is used to distinguish from another element. A length (length) is a parameter length of the EDCA parameter set element, not including the element identifier field and the length field.

A quality of service information (quality of service information, QoS info) field further includes a sub-option. The sub-option is an EDCA parameter set update count (EDCA parameter set update count), and is used to notify the terminal whether the EDCA parameter set element changes.

The EDCA parameter set element further includes a parameter record field of each access category, and each parameter record field defines QoS parameters used when the STA executes the access category. As shown in FIG. 2, the parameter record field of each access category includes an AC index (AC index, ACI)/arbitration interframe space number (arbitration interframe space number, AIFSN), an exponent form of contention window, and a transmission opportunity (transmission opportunity, TXOP) limit.

The ACI/AIFSN includes the AIFSN. The AIFSN indicates a quantity of slots delayed after short interframe space (short interframe space, SIFS) time when the AP (or the STA) accesses the network. A smaller value of this parameter indicates shorter time the AP (or the STA) waits for accessing the Wi-Fi channel.

The ECW indicates a size of an EDCA contention window, and a value determines duration of average backoff time. A smaller value indicates shorter average backoff time. The ECW parameter includes a minimum size (ECWmin) of the ECW and a maximum size (ECWmax) of the ECW.

The TXOP limit indicates a time limit for the STA to occupy the Wi-Fi channel to transmit data. A larger value indicates longer time for the STA to continuously occupy the channel.

The AP broadcasts the EDCA parameter set element to the STA. The EDCA parameter set element includes a QoS parameter set that is set by the AP for the STA and for processing each access category. The AP configures different QoS parameters for different access categories. For example, a smaller AIFSN, a smaller ECWmin, a smaller ECWmax, and a larger TXOP are configured for AC_VI and AC_VO that require real-time transmission, and a larger AIFSN, a larger ECWmin, a larger ECWmax, and a smaller TXOP are configured for other access categories, so that AC_VI and AC_VO services have higher priorities when accessing the Wi-Fi channel, and other services have lower priorities, to meet a requirement of a real-time service, and obtain better service experience. In an example, possible EDCA parameters configured on a STA side are shown in FIG. 3.

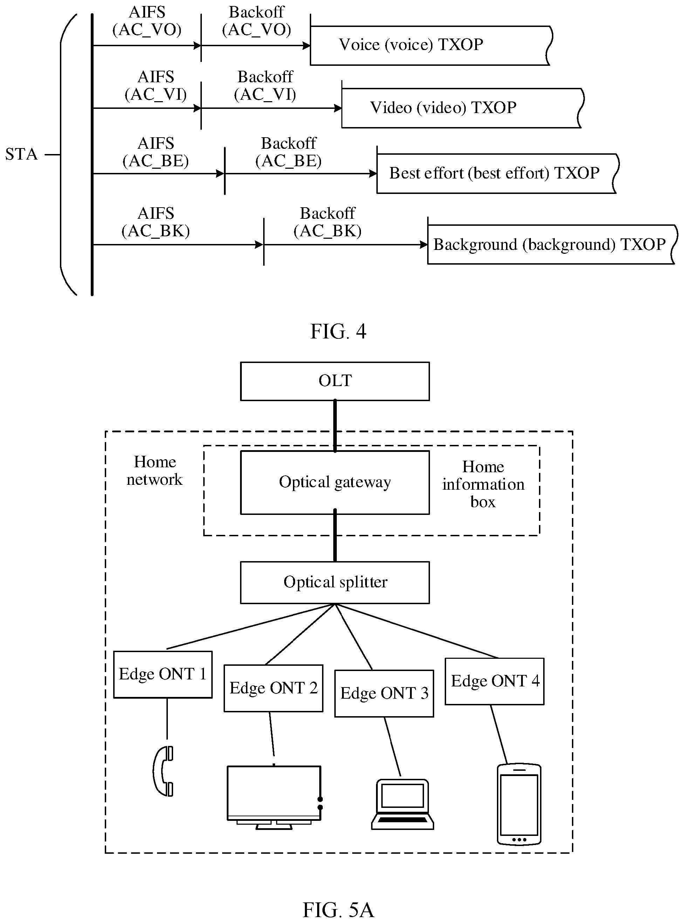

With reference to FIG. 4, after receiving the EDCA parameter set element, when the STA needs to send service data on the channel, the STA monitors whether the channel is busy, and starts AIFS (AIFS=SIFS (16 µs)+AIFSN (AC)×slot (9 µs)) countdown when detecting that the channel is idle. As shown in FIG. 4, an AC service with a higher priority has shorter AIFS. When an AIFS countdown reaches 0, backoff (backoff) countdown starts. A backoff countdown is determined by CWmin. A backoff countdown of each STA is randomly selected from 0 to CWmin, and backoff countdown time=backoff countdown×slot (9 µs). For an AC service with a higher priority, an initial CWmin value is smaller, a randomly selected backoff countdown is more likely to be smaller, and the channel may be preferentially preempted. After the channel is preempted, channel occupation duration is determined based on a TXOP value. Compared with BE and BK services, VI and VO services may occupy the channel for longer time. In addition, the AP usually also needs to use the channel to send service data, for example, some control information. Currently, an implementation in which the AP contends for the channel is similar to the implementation of the STA shown in FIG. 4.

As described in the background, with development of networks, there are more devices in a home network, and there is an increasing probability that a plurality of devices contend for a Wi-Fi channel at a same moment. Therefore, if a plurality of devices contend for a Wi-Fi channel at a same moment, a random backoff conflict may occur, resulting in problems such as a packet sending failure, a reduced network throughput, and an increased service delay.

In view of this, embodiments of this application provide a scheduling method, to provide a feasible manner to avoid a random backoff conflict over an air interface, and therefore improve data transmission efficiency on a channel in a wireless network and improve network-wide performance of the wireless network.

Embodiments of this application are applicable to a WLAN deployment manner using fiber to the room (fiber to the room, FTTR). In FTTR, an optical fiber is laid in each room, and an edge network device is deployed in each room to implement home gateway interconnection. FTTR can meet high requirements of new service applications such as online education, home office, and home entertainment on a bandwidth and a delay. The edge network device may be an edge ONT or an AP, and may be used as a network node in the wireless network. In an FTTR application scenario, a gateway device is deployed to manage the edge network device. The gateway device may be an optical gateway, an ONT, a PON gateway, or the like, and may be used as a control node in the wireless network.

In an example, FIG. 5A is a diagram of a topological structure of an optical communication system applied to FTTR. The optical communication system applied to FTTR includes at least an optical gateway, an optical splitter, and a plurality of edge optical network terminals (edge optical network terminals, edge ONTs). In embodiments of this application, the edge ONT may also be referred to as an EDGE ONT, or may be referred to as an Edge ONT. The optical gateway may communicate with the plurality of EDGE ONTs through the optical splitter. The optical communication system further includes an OLT. The optical gateway is deployed between the OLT and the edge ONTs. In an FTTR scenario, the optical gateway is connected to a home information box through fiber to the home, and is connected to each room through the optical splitter. An edge (Edge) ONT is deployed in each room. The optical gateway at the information box manages the plurality of Edge ONTs in a coordinated manner. In an FTTR architecture, the plurality of ONTs are connected to the optical gateway through optical fibers. Compared with a multi-AP Wi-Fi cascading solution, in this solution, control and management resources do not occupy a Wi-Fi air interface, so that real-time management of the optical gateway can be improved. A terminal device may access the Edge ONT to implement network communication.

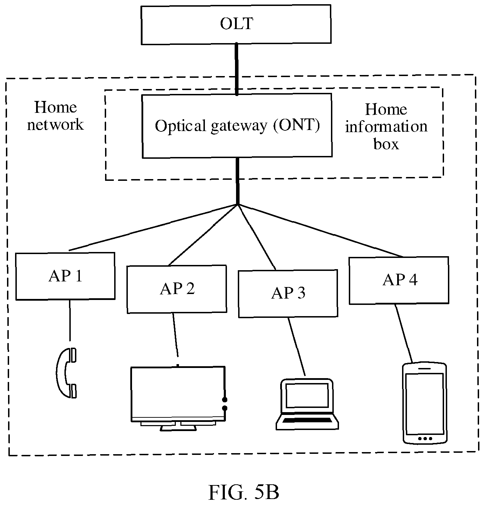

In another example, FIG. 5B is a diagram of a topological structure of another optical communication system applied to a home network. The optical communication system includes at least an ONT and a plurality of APs. The ONT is configured to perform coordinated management on an AP deployed in each room.

The optical communication system of FTTR may use a passive optical network (passive optical network, PON). The PON may be a gigabit-capable passive optical network (gigabit-capable PON, GPON), an ethernet passive optical network (ethernet PON, EPON), a 10 Gbit/s ethernet passive optical network (10 Gbit/s ethernet passive optical network, 10G-EPON), a time and wavelength division multiplexing passive optical network (time and wavelength division multiplexing passive optical network, TWDM-PON), a 10-gigabit-capable passive optical network (10-gigabit-capable passive optical network, XG-PON), a 10-gigabit-capable symmetric passive optical network (10-gigabit-capable symmetric passive optical network, XGS-PON), or the like. A future evolved new technology may increase a rate of the PON to 25 Gbps, 50 Gbps, or even 100 Gbps. Therefore, this application may be further applied to a PON with a higher transmission rate.

In embodiments of this application, an advantage of coordinated management of the gateway device on the edge network devices in the FTTR architecture is used, and a network device centrally decides a sequence of the edge network devices for channel contention, to avoid a random backoff conflict and optimize network-wide performance. It should be noted that this application may also be applied to a non-FTTR architecture, and any architecture of a communication system including a control node and a network node is applicable to embodiments of this application. The foregoing merely uses the FTTR architecture as an example, and this is not limited.

With reference to the accompanying drawings, the following describes in detail the method provided in embodiments of this application.

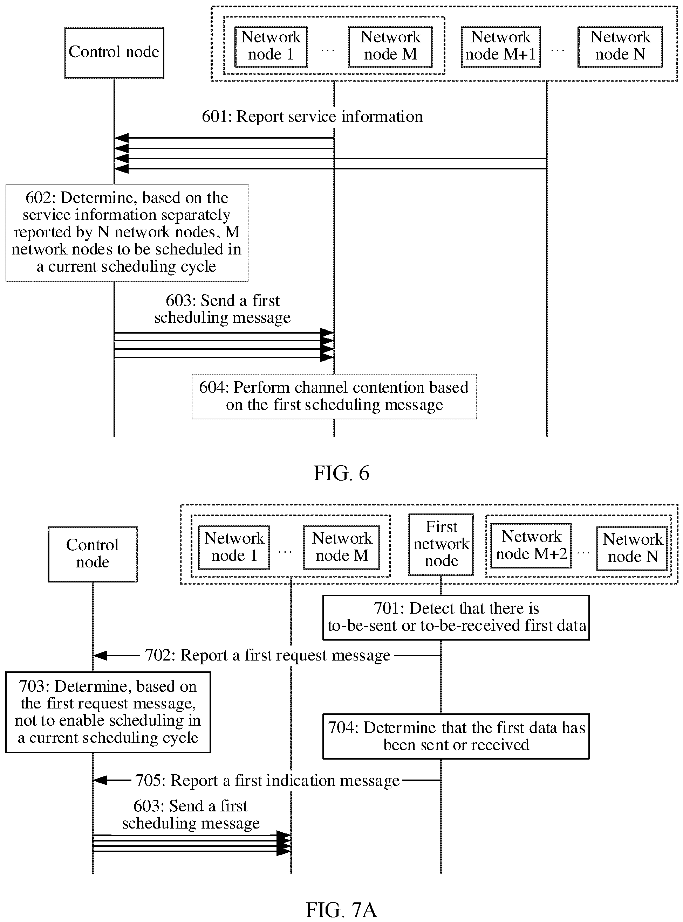

FIG. 6 is an interaction flowchart of a scheduling method according to an embodiment of this application.

Step 601: A control node receives service information separately reported by N network nodes (for example, a network node 1 to a network node N shown in FIG. 6, where it should be noted that the network node 1 to the network node N are merely used for differentiation), where the service information indicates information about service data that needs to be transmitted by the network node on a channel, and N is a positive integer. For example, the service information may include but is not limited to the following information: a service type, service traffic, a service delay, and a service priority. It should be noted that the control node itself may also be used as a network node. In this scenario, the N network nodes may further include the control node. In this case, the control node may receive, in a manner such as internal reporting, service information reported by the control node.

For example, the control node may receive service information of the network node for a plurality of times. When deciding, in each scheduling cycle, a network node to be scheduled in the current scheduling cycle, the control node may perform centralized decision-making based on latest service information of each network node.

In an optional embodiment, the N network nodes may periodically report service information, for example, report service information once every second, so that the control node may perform decision-making of centralized scheduling based on latest service information of each network node. Therefore, scheduling accuracy and network-wide performance in a wireless network can be improved. Different cycles may be further correspondingly set for network nodes. For example, a short cycle may be set for a network node serving a large quantity of terminal devices, and a long cycle may be set for a network node serving a small quantity of terminal devices. Further, during implementation of this application, each network node may further monitor service traffic statuses in different time periods, and different cycles may be set in the different time periods. For example, a long cycle may be set for a time period in the early morning, and a short cycle may be set for a time period in the evening. In this way, the scheduling accuracy can be ensured, and resource consumption of the network node and the control node can be further reduced.

In another optional embodiment, the network node may alternatively report updated service information to the control node each time the network node is scheduled and before or after service data transmission is completed on a channel, so that the control node can obtain latest service information of the network node in a timely manner, and further generate a more accurate scheduling decision. It may be implemented as follows: After a network node scheduled in a previous scheduling cycle wins a channel through contention, and before or after service data transmission is completed, the control node receives a second response message reported by the network node, and obtains latest service information of the network node based on the second response message, to accurately decide a network node to be scheduled in a current scheduling cycle.

It should be noted that an implementation in which each network node reports service information to the control node is not limited in this application. Some network nodes (for example, unscheduled network nodes) may update service information in a periodic reporting manner, and some scheduled network nodes may report updated service information in a timely manner by using second response messages during scheduling, or the scheduled network nodes may also update service information in the periodic reporting manner.

In addition, after receiving the updated service information of the network node, the control node updates previously obtained service information of the network node. Optionally, the control node may discard historical service information based on the updated service information, and use the updated service information as service information of the network node. Alternatively, it may be implemented as follows: The control node incrementally updates the previously obtained service information of the network node based on the updated service information. This may be determined based on an actual scenario during implementation.

In addition, in a scenario in which the wireless network is initially constructed or there is a network node that newly goes online (for example, a newly added network node or a network node that is powered on again after being powered off), each network node may report initial service information. In this way, the control node may be notified that there is the newly added network node, and the control node may obtain the service information of the network node. In another aspect, the control node provided in this embodiment of this application has a function of centrally scheduling network nodes to send data. Therefore, when the network node does not receive service information of the network node, or cannot successfully receive a response message of the network node after scheduling the network node, the control node may also actively deliver scheduling information used for testing, to avoid a scheduling exception caused by problems such as a device fault and a message transmission loss. For example, when the control node cannot determine a to-be-scheduled network node based on the service information of the network node, the control node may sequentially schedule the connected network node by using a scheduling message.

Step 602: The control node determines, based on the service information separately reported by the N network nodes, M network nodes (for example, the network node 1 to a network node M in FIG. 6, where the network node 1 to the network node M are also merely used for differentiation) to be scheduled in the current scheduling cycle, where M is a positive integer. It may be understood that M is less than or equal to N. In addition, if the control node determines that there is no to-be-scheduled network node in the current scheduling cycle (that is, M is 0, for example, each network node keeps in a silent state), the control node may perform decision-making of a next scheduling cycle after preset duration. The preset duration may be determined based on the set scheduling cycle, and duration corresponding to the scheduling cycle may be different in different time ranges.

On the basis of avoiding a problem of a conflict in air interface contention, to improve the network-wide performance and transmission efficiency of the wireless network, the control node may further determine that no interference exists between the to-be-scheduled M network nodes. Optionally, if a first network node and a second network node are on different channels, it may be determined that no interference exists between the first network node and the second network node. In this case, the control node may schedule both the first network node and the second network node in the current scheduling cycle. In another optional implementation, if there is no overlapping coverage area between coverage of the first network node and the second network node due to a long distance, it may also be determined that no interference exists between the first network node and the second network node. In this case, the control node may schedule both the first network node and the second network node in the current scheduling cycle. If the first network node and the second network node cannot find each other through scanning, or detected signal strength is less than or equal to a specified threshold even if the first network node and the second network node find each other through scanning, it may be determined that no interference exists because a distance between the first network node and the second network node is long.

In an optional embodiment, the control node may determine priorities of the N network nodes based on, but not limited to, at least one of the following manners, to decide, based on the priorities of the N network nodes, scheduling of which network node is to be enabled:
(1) If the service information separately reported by the N network nodes includes the service type, the priorities of the N network nodes are determined based on the service type and a preconfigured service type priority.

For example, the service type may be represented as AC_BE, AC_BK, AC_VI, or AC_VO in the foregoing embodiment. If a service type of a network node is a real-time multimedia service (for example, a service of the AC_VI or AC_VO type), it may be determined that the network node has a high priority. It should be noted that a preconfigured service type may alternatively be configured as another type, and a priority corresponding to each service type may alternatively be preconfigured based on an actual application scenario. This is not limited in this application.

(2) If the service information separately reported by the N network nodes includes the service traffic, the priorities of the N network nodes are determined based on the service traffic. If service traffic of a network node is larger, the control node may determine that the network node has a higher priority. In this way, in this implementation, preferential scheduling of a network node having a high service traffic requirement can be implemented. For example, it is assumed that the network includes a network node 1 and a network node 2, service traffic reported by the network node 1 is 1024 MB, and service traffic reported by the network node 2 is 10 MB. In this case, because the service traffic of the network node 1 is greater than that of the network node 2, the control node may preferentially schedule the network node 1. In this way, problems such as excessively high storage pressure in the network that is caused because the network node 1 cannot send a service can be avoided.

(3) If the service information separately reported by the N network nodes includes the service delay, the priorities of the N network nodes are determined based on the service delay.

If a network node has a higher service delay requirement, the control node determines that the network node has a higher priority. Alternatively, if a network node has a higher service delay, the control node may determine that the network node has a higher priority. In this way, delay requirements of some services can be met in this implementation. For example, a delay requirement of a service 1 is less than 7 ms, and a service 2 has no delay requirement. In this case, the control node may preferentially schedule a network node 1 that requests to transmit the service 1. This can also avoid affecting network-wide transmission efficiency when a network node with a high service delay is scheduled. For example, it is assumed that the network includes a network node 1 and a network node 2, a service delay reported by the network node 1 is 10s, and a service delay reported by the network node 2 is 1s. In this case, because the service delay of the network node 1 is greater than that of the network node 2, the control node may preferentially schedule the network node 1.

(4) If the service information separately reported by the N network nodes includes the service priority, the priorities of the N network nodes are determined based on the service priority.

For example, the service priority may be preset. For example, a service 1 is preset with a highest priority, and a service 2 is preset with a lowest priority. Alternatively, the service priority may be determined based on user account information. For example, if a user 1 is a VIP member on a specified platform, when transmitting a service corresponding to the specified platform, the network node identifies that service data corresponding to the user 1 has a service priority.

When determining the priorities of the N network nodes in a plurality of manners in the foregoing manners, the control node may further determine the priorities of the N network node with reference to a weight corresponding to each manner. For example, a weight corresponding to the service priority may be 50%, a weight corresponding to the service type may be 20%, a weight corresponding to the service traffic may be 15%, and a weight corresponding to the service delay may be 15%. In this way, the control node may comprehensively consider a plurality of scenarios of service data of each network node, to obtain a more accurate decision result.

It should be noted that, in the foregoing manners, the control node may alternatively directly determine the to-be-scheduled network node based on information included in the service information of the network node, and does not need to determine the to-be-scheduled network node by indirectly determining the priorities of the N network nodes first.

In another optional embodiment, if a first network node has a requirement for preferentially sending or receiving first data, the control node may also determine, based on a request of the first network node, not to enable scheduling in the current scheduling cycle, and reserve a specific time window for the first network node, so that the first network node preferentially occupies a channel. Alternatively, the control node preferentially schedules the first network node, for example, preferentially schedules the first network node before scheduling the M network nodes in the current cycle.

In a possible scenario, currently, most services in the wireless network are transmission control protocol (transmission control protocol, TCP) services, and a throughput for transmitting the TCP service is usually affected by round-trip time (round-trip time, RTT) (where the round-trip time indicates time from sending data by a transmit end to receiving an acknowledgment from a receive end by the transmit end). A smaller value of the RTT indicates a higher throughput for transmitting the TCP service. In this scenario, if interference exists over an air interface due to contention, time required for a TCP acknowledge (acknowledge, ACK) message increases. As a result, the RTT increases, affecting the network-wide transmission efficiency.

Based on this, during implementation of this application, each network node may detect whether there is a requirement for preferentially occupying a channel to send or receive first data, for example, in the foregoing scenario, the network node needs to preferentially occupy a channel to receive the TCP ACK message, to avoid an increase of RTT. It is assumed that a first network node has a requirement for sending or receiving first data. In this case, the first network node may report a first request message, where the first request message is used to request to preferentially occupy a channel to transmit the first data. Alternatively, the first network node may include, when reporting service information (or sending a message, for example, a first response message or a second response message), priority request information used to request to preferentially occupy a channel. If the control node receives the first request message, or obtains the priority request information from another message sent by the network node, the control node may determine that the first network node has a requirement for preferentially occupying a channel. During implementation of this application, based on an actual configuration in the network, the control node may feed back an authorization message, to notify the first network node that the first network node is allowed to preferentially occupy a channel. Alternatively, the control node may directly adjust a decision or a sequence of centralized scheduling based on a priority request of the first network node. In this configuration, the first network node may directly transmit data on a channel after sending the first request message or the priority request information.

Optionally, the control node may determine, based on the first request message or the priority request information included in the service information, not to enable scheduling in the current scheduling cycle, or to preferentially schedule the first network node, or not to enable scheduling of a second network node that may interfere with the first network node in the current scheduling cycle. FIG. 7A is a schematic interaction flowchart of a scheduling method according to an embodiment of this application. Before the control node performs scheduling in the current scheduling cycle in step 603, the control node and the network node may further perform the following interaction procedure:

Step 701: A first network node detects that there is to-be-sent or to-be-received first data. For example, usually, after a network node sends two or three pieces of TCP data to a receiver, the receiver replies with a TCP ACK message. Based on this, each network node may collect statistics on a quantity of pieces of sent TCP data. If the quantity is greater than a preset quantity threshold (assumed as n, where n may be 2, 3, or the like), it may be determined that the network node has to-be-sent or to-be-received first data. The first network node may be any one of the N network nodes. In FIG. 7A, the first network node is used as an example. During specific implementation, the first network node may alternatively be any one of the M network nodes. This is not limited in this application.

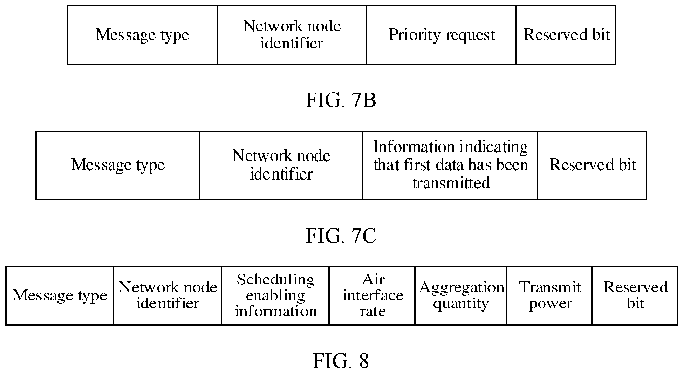

Step 702: The first network node reports a first request message, where the first request message is used to request to preferentially occupy a channel to send or receive first data. FIG. 7B shows an example of the first request message according to an embodiment of this application. The first request message may include but is not limited to the following information: a message type, a network node identifier, a priority request, and a reserved bit. The message type may indicate that the message is a first request message, and the network node identifier may indicate the first network node. The reserved bit is a field reserved for a to-be-developed function or an undeveloped function in advance, and is used to extend a message function. A reserved bit in a subsequent embodiment is similar, and is not described again subsequently.

Step 703: The control node determines, based on the first request message, not to enable scheduling in the current scheduling cycle, or to preferentially schedule the first network node, or not to enable scheduling of a second network node that meets a preset condition with the first network node in the current scheduling cycle. The preset condition includes the following information: The second network node and the first network node are on a same channel, and the first network node detects that signal strength of the second network node is greater than a specified threshold or the second network node detects that signal strength of the first network node is greater than the specified threshold. That is, if the second network node and the first network node simultaneously perform channel contention, a backoff conflict problem may exist. On the contrary, it may be understood that, if the first network node and the second network node are on different channels, or there is no cross coverage area due to a long distance, even if the first network node and the second network node simultaneously transmit data on a channel, there is no backoff conflict problem. Based on this, the control node may allow a plurality of network nodes to perform channel contention, to improve data transmission efficiency.

In addition, if the control node determines that the first network node is one of the M network nodes to be scheduled in the current scheduling cycle, the control node may further continue scheduling in the current scheduling cycle. In this way, not only a requirement of preferentially occupying a channel by the first network node can be met, but also network-wide sending efficiency can be ensured.

Step 704: The first network node determines that the first data has been sent or received.

Step 705: The first network node reports a first indication message, where the first indication message indicates that the first network node has sent or received the first data. Optionally, if the control node determines, in step 703, not to enable scheduling in the current scheduling cycle, the control node may resume scheduling in the current scheduling cycle based on the first indication message in this case. In another optional implementation, if the control node determines, in step 703, not to enable scheduling of the second network node in the current scheduling cycle, the control node may resume scheduling of the second network node based on the first indication message in this case. FIG. 7C shows an example of the first indication message according to an embodiment of this application. The first indication message may include but is not limited to the following information: a message type, a network node identifier, information indicating that the first data has been transmitted (sent or received), and a reserved bit.

In addition, it may be understood that, in each scheduling cycle, there may be a network node initiating the interaction procedure shown in FIG. 7A, to preferentially occupy a channel to send or receive first data. Only one scheduling cycle is used as an example in the foregoing descriptions.

Step 603: The control node sends a first scheduling message to the M network nodes, where the first scheduling message indicates that the M network nodes are allowed to perform channel contention. Optionally, the control node may send the first scheduling message to the M network nodes in a unicast manner. In another optional implementation, the control node may alternatively send the first scheduling message in a broadcast or multicast manner, so that the M network nodes receive the first scheduling message.

FIG. 8 shows an example of a scheduling message according to this application. The scheduling message (which may be the first scheduling message, or a second scheduling message in the following embodiment) may include but is not limited to the following messages: a message type, a network node identifier, scheduling enabling information, an air interface rate, an aggregation quantity, transmit power, and a reserved bit. The scheduling enabling information may be an indication of enabling scheduling or disabling scheduling, and each network node may determine, based on the network node identifier, whether scheduling is enabled. Alternatively, the scheduling enabling information may be only an indication of enabling scheduling, and in this case, the network node identifier may include only a to-be-scheduled network node. For example, the scheduling message may further include the following information: indication power, a channel, an antenna polarization direction, an antenna beam direction, and the like.

Step 604: The M network nodes separately perform channel contention based on the first scheduling message. For example, if a network node receives the first scheduling message, the first scheduling message includes an identifier of the network node, and the scheduling enabling information is "allowed", the network node may perform channel contention in this case. Further, the network node sends data after winning a channel through contention. Compared with a conventional technology in which a network node obtains, in manners such as free contention and random backoff, an opportunity for sending data on a channel, this embodiment of this application can avoid a conflict problem that may be caused by random backoff. It may be understood that, if a network node does not receive the first scheduling message, or the network node receives the first scheduling message but the first scheduling message indicates that scheduling is not enabled, the network node does not perform channel contention in this case, and continues to wait for a decision result of the control node for the next scheduling cycle.

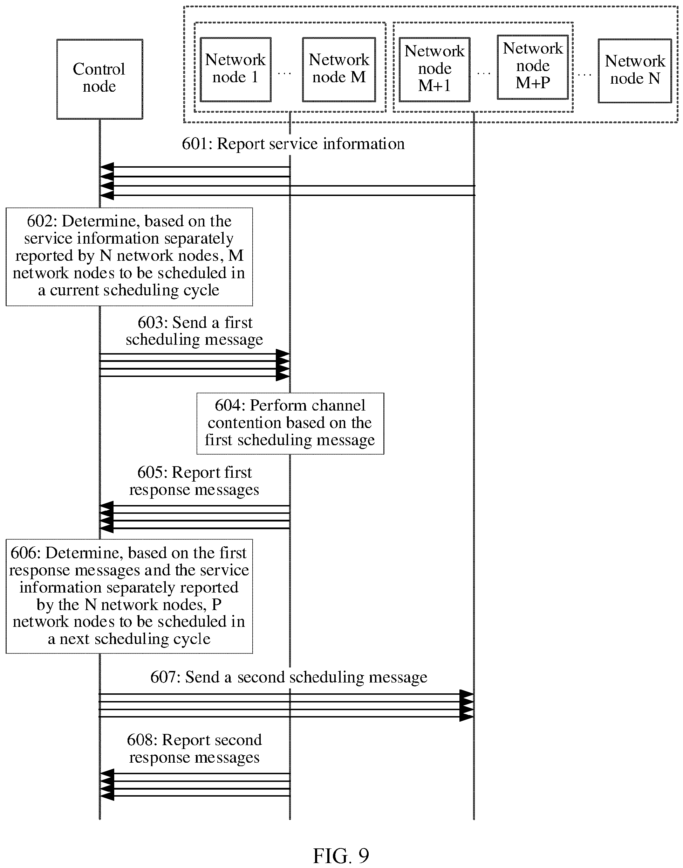

In a possible implementation, after being scheduled, each network node may further report a scheduling status to the control node in a timely manner, so that the control node updates service information of each network node in a timely manner, to implement more accurate scheduling. FIG. 9 is a schematic flowchart of another possible scheduling method according to an embodiment of this application.

Step 605: The M network nodes separately report first response messages, where the first response message indicates that the network node wins a channel through contention.

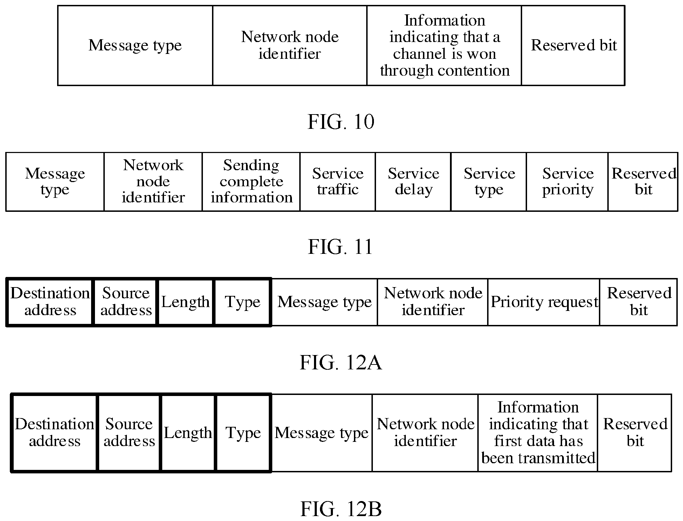

FIG. 10 shows an example of the first response message according to an embodiment of this application. The first response message may include but is not limited to the following information: a message type, a network node identifier, information indicating that a channel is won through contention (backoff done, BO_done), and a reserved bit.

Step 606: The control node determines, based on the first response messages and the service information separately reported by the N network nodes, P network nodes to be scheduled in the next scheduling cycle, where P is a positive integer. It may be understood that P is less than or equal to N. For a manner of performing decision-making in the next scheduling cycle, refer to the content described in the foregoing embodiment. Details are not described herein again.

Step 607: The control node sends a second scheduling message to the P network nodes, where the second scheduling message indicates that the P network nodes are allowed to perform channel contention. If P is 0, the control node may also wait for preset duration, and then perform scheduling decision-making in a subsequent scheduling cycle.

Step 608: The M network nodes separately report second response messages, where the second response message indicates service information for update by the network node before or after service data transmission of the current scheduling cycle is completed. Optionally, the network node may immediately report the second response message after completing service data sending, to notify the control node in a timely manner. In another optional implementation, if a delay requirement of service data transmitted by a network node is not high, the network node may alternatively report a second response message after being scheduled (being allowed to perform channel contention) for a plurality of times, so that load in the network can be reduced. During actual implementation, a specific reporting manner may be adjusted based on an actual requirement. For example, if the actual requirement focuses more on the load in the network, a manner of unified reporting after a plurality of times of scheduling may be used.

FIG. 11 shows an example of the second response message according to an embodiment of this application. The second response message may include but is not limited to the following information: a message type, a network node identifier, sending complete information, service traffic, a service delay, a service type, a service priority, and a reserved bit. The service traffic, the service delay, the service type, and the service priority in the second response message are updated service information obtained after the M network nodes complete sending in the current scheduling cycle. The updated service information may be used as service information re-reported by the M network nodes. The control node may continue to determine, based on the updated service information, a network node to be scheduled in the subsequent scheduling cycle.

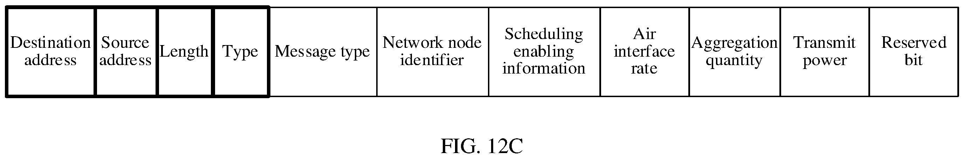

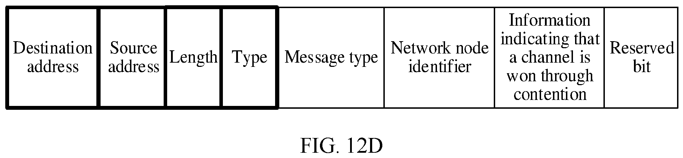

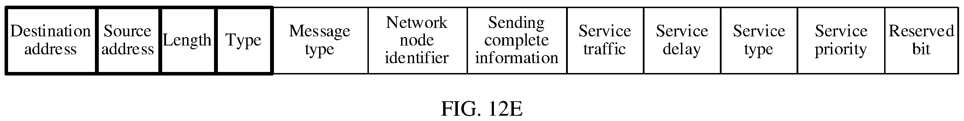

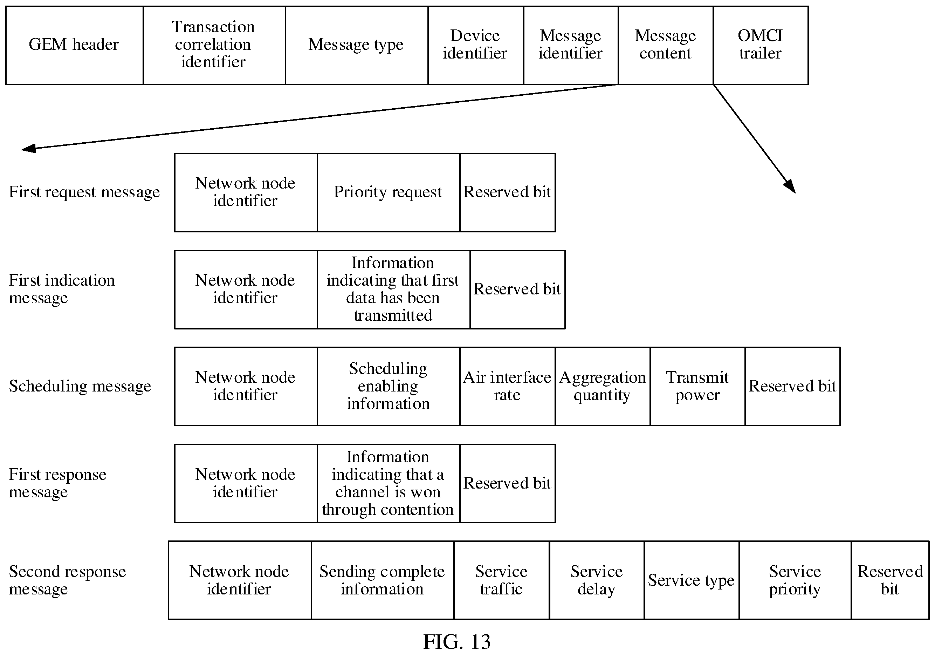

In the content of the foregoing embodiment, the examples of the first request message, the first indication message, the scheduling message, the first response message, and the second response message are implemented by using newly added frames. During implementation of this application, the examples may alternatively be implemented by reusing existing frames in the wireless network. For example, FIG. 12A to FIG. 12E show examples of an ethernet frame according to an embodiment of this application. Various messages in this embodiment of this application are extended in a payload (payload) field in the ethernet frame. An ethernet packet header usually includes a destination address, a source address, a length, and a type. For another example, FIG. 13 shows an example of an optical network terminal management and control interface (optical network terminal management and control interface, OMCI) protocol frame according to an embodiment of this application. Various messages in this embodiment of this application may alternatively be extended in the OMCI protocol frame used in a passive optical network (passive optical network, PON). The OMCI protocol frame includes: a GPON encapsulation mode (GPON encapsulation mode, GEM) header (header), a transaction correlation identifier (transaction correlation identifier), a message type (message type), a device identifier (device identifier), a message identifier (message identifier), message content (message content), and an OMCI trailer (trailer).

According to the method provided in this embodiment of this application, the control node may implement centralized control on a plurality of network nodes, and may further decide, by collecting statistics on service information of the network nodes, a sequence in which the network nodes are allowed to send data. In this way, in the network, a network node scheduled by the control node in each scheduling cycle is allowed to perform channel contention in the current scheduling cycle to send data on a channel, and a network node that is not scheduled needs to wait for a scheduling result of a next scheduling cycle. Compared with a manner in which each network node freely performs channel contention in the conventional technology, in this method, a random backoff conflict over an air interface can be avoided, and each network node can implement sequential data sending under centralized control of the control node, so that the network-wide sending efficiency in the network can be improved.

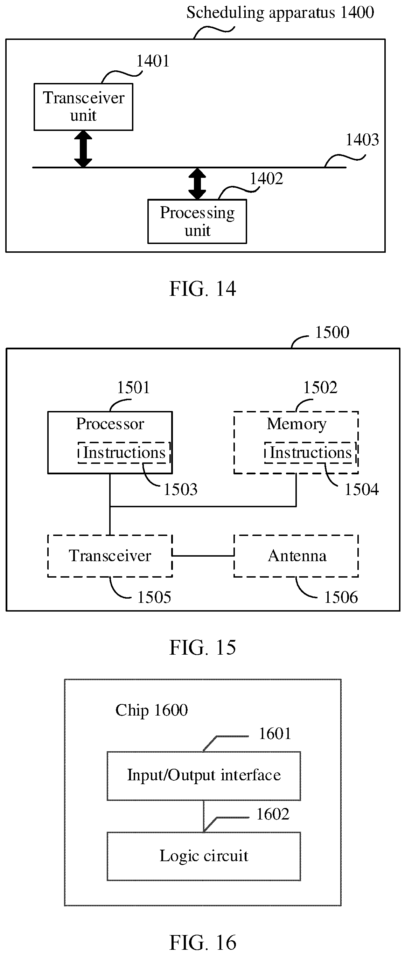

Based on a same inventive concept as the method embodiment, an embodiment of this application further provides a scheduling apparatus 1400. As shown in FIG. 14, the apparatus may be disposed on a control node. The scheduling apparatus 1400 includes a transceiver unit 1401 and a processing unit 1402. The scheduling apparatus 1400 may be configured to implement the method described in the method embodiment. Optionally, the transceiver unit 1401 and the processing unit 1402 may be interconnected through a communication line 1403. The communication line 1403 may be a peripheral component interconnect (peripheral component interconnect, PCI for short) bus, an extended industry standard architecture (extended industry standard architecture, EISA for short) bus, or the like. The communication line 1403 may be classified into an address bus, a data bus, a control bus, and the like. For ease of representation, only one thick line is used to represent the communication line in FIG. 14, but this does not mean that there is only one bus or only one type of bus.

The transceiver unit 1401 is configured to receive service information separately reported by N network nodes, where the service information indicates information about service data that needs to be transmitted by the network node on a channel, and N is a positive integer. The processing unit 1402 is configured to determine, based on the service information separately reported by the N network nodes, M network nodes to be scheduled in a current scheduling cycle, where M is a positive integer, and M is less than or equal to N. The transceiver unit 1401 is further configured to send a first scheduling message to the M network nodes, where the first scheduling message indicates that the M network nodes are allowed to perform channel contention.

In a possible design, the transceiver unit 1401 is further configured to receive first response messages separately reported by the M network nodes, where the first response message indicates that the network node wins a channel through contention. The processing unit 1402 is further configured to determine, based on the first response messages and the service information separately reported by the N network nodes, P network nodes to be scheduled in a next scheduling cycle, where P is a positive integer, and P is less than or equal to N. The transceiver unit 1401 is further configured to send a second scheduling message to the P network nodes, where the second scheduling message indicates that the P network nodes are allowed to perform channel contention.

In a possible design, the processing unit 1402 is further configured to update service information of a network node in at least one of the following manners:
Manner 1: Receive, through the transceiver unit 1401, second response messages separately reported by the M network nodes, where the second response message indicates service information for update by the network node before or after service data transmission of the current scheduling cycle is completed.
Manner 2: Receive, through the transceiver unit 1401, updated service information separately and periodically reported by the N network nodes.

In a possible design, the service information includes at least one of the following information: a service type, service traffic, a service delay, and a service priority. When determining, based on the service information separately reported by the N network nodes, the M network nodes to be scheduled in the current scheduling cycle, the processing unit 1402 is specifically configured to: if the service information separately reported by the N network nodes includes the service type, determine priorities of the N network nodes based on the service type and a preconfigured service type priority; if the service information separately reported by the N network nodes includes the service traffic, determine priorities of the N network nodes based on the service traffic; if the service information separately reported by the N network nodes includes the service delay, determine priorities of the N network nodes based on the service delay; and if the service information separately reported by the N network nodes includes the service priority, determine priorities of the N network nodes based on the service priority; and determine, based on the priorities of the N network nodes, the M network nodes to be scheduled in the current scheduling cycle.

In a possible design, the transceiver unit 1401 is further configured to: before sending the first scheduling message to the M network nodes, if receiving a first request message reported by a first network node, or if determining that service information of a first network node further includes priority request information, determining that the first network node requests to preferentially occupy a channel, where the first request message or the priority request information is used to request to preferentially occupy a channel to send or receive first data. The processing unit 1402 is further configured to: after a first indication message reported by the first network node is received, performing scheduling in the current scheduling cycle, where the first indication message indicates that the first network node has sent or received the first data. Alternatively, the processing unit 1402 is further configured to: after a first indication message reported by the first network node is received, performing scheduling of a second network node in the current scheduling cycle, where the second network node and the first network node meet a preset condition, and the preset condition includes the following information: the second network node and the first network node are on a same channel, and the first network node detects that signal strength of the second network node is greater than a specified threshold or the second network node detects that signal strength of the first network node is greater than the specified threshold.

In a possible design, the first scheduling message includes the following information: a network node identifier and scheduling enabling information.

In a possible design, the service information or the first scheduling message is sent in one of the following manners: a customized data frame, an ethernet frame, and an OMCI protocol frame.

In another example, the scheduling apparatus shown in FIG. 14 may alternatively be disposed on a network node. In this example, the transceiver unit 1401 is configured to report service information to a control node, where the service information indicates information about service data that needs to be transmitted by a network node on a channel. The transceiver unit 1401 is further configured to receive a first scheduling message sent by the control node, where the first scheduling message indicates that the network node is allowed to perform channel contention. The processing unit 1402 is configured to perform channel contention based on the first scheduling message.

In a possible design, the transceiver unit 1401 is further configured to report a first response message to the control node, where the first response message indicates that the network node wins a channel through contention.

In a possible design, the transceiver unit 1401 is further configured to update the service information to the control node in at least one of the following manners:
Manner 1: Report a second response message to the control node, where the second response message indicates service information for update by the network node before or after service data transmission of a current scheduling cycle is completed.
Manner 2: Periodically report updated service information.

In a possible design, the service information includes at least one of the following information: a service type, service traffic, a service delay, and a service priority.

In a possible design, the processing unit 1402 is further configured to detect that there is to-be-sent or to-be-received first data. The transceiver unit 1401 is further configured to report a first request message to the control node, where the first request message is used to request to preferentially occupy a channel to send or receive the first data. The transceiver unit 1401 is further configured to: after the first data has been sent or received, report a first indication message to the control node, where the first indication message indicates that the network node has sent or received the first data.

In a possible design, the first scheduling message includes the following information: a network node identifier and scheduling enabling information.

In a possible design, the service information or the first scheduling message is sent in one of the following manners: a customized data frame, an ethernet frame, and an OMCI protocol frame.

It should be noted that, in embodiments of this application, division into the modules is an example and is merely logical function division, and may be other division during actual implementation. For example, a plurality of units or components may be combined or integrated into another system, or some features may be ignored or not performed. In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on a same concept as the scheduling method, an embodiment of this application further provides another scheduling apparatus 1500, and FIG. 15 is a diagram of a structure of the apparatus. The scheduling apparatus 1500 may be configured to implement the method described in the method embodiment. For details, refer to the descriptions in the method embodiment. The scheduling apparatus 1500 may include one or more processors 1501. The processor 1501 may be a general-purpose processor, a dedicated processor, or the like. For example, the processor may be a baseband processor or a central processing unit. The baseband processor may be configured to process a communication protocol and communication data. The central processing unit may be configured to: control the scheduling apparatus (for example, a base station, a terminal, or a chip), execute a software program, and process data of the software program. The scheduling apparatus may include a transceiver unit, configured to implement signal input (receiving) and output (sending). For example, the transceiver unit may be a transceiver or a radio frequency chip.

The scheduling apparatus 1500 includes one or more processors 1501, and the one or more processors 1501 may implement the method shown in the foregoing embodiment.

Optionally, the processor 1501 may further implement another function in addition to the method shown in the foregoing embodiment.

Optionally, in a design, the processor 1501 may execute instructions, to enable the scheduling apparatus 1500 to perform the method described in the method embodiment. All or some of the instructions, for example, instructions 1503, may be stored in the processor. Alternatively, all or some of the instructions, for example, instructions 1504, may be stored in a memory 1502 coupled to the processor. Alternatively, the instructions 1503 and the instructions 1504 may be used together to enable the scheduling apparatus 1500 to perform the method described in the method embodiment.

In another possible design, the scheduling apparatus 1500 may include one or more memories 1502 that store instructions 1504. The instructions may be run on the processor, to enable the scheduling apparatus 1500 to perform the method described in the method embodiment. Optionally, the memory may further store data. Optionally, the processor may also store instructions and/or data. For example, the one or more memories 1502 may store the correspondence described in the foregoing embodiment, or the related parameter, table, or the like in the foregoing embodiment. The processor and the memory may be separately disposed, or may be integrated with each other.

In still another possible design, the scheduling apparatus 1500 may further include a transceiver 1505 and an antenna 1506. The processor 1501 may be referred to as a processing unit, and controls the apparatus (a terminal or a base station). The transceiver 1505 may be referred to as a transceiver, a transceiver circuit, a transceiver unit, or the like, and is configured to implement sending and receiving functions of the apparatus through the antenna 1506.

It should be noted that, the processor in embodiments of this application may be an integrated circuit chip, and has a signal processing capability. In an implementation process, the steps in the method embodiment can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the method in combination with hardware of the processor.

It may be understood that the memory in embodiments of this application may be a volatile memory or a nonvolatile memory, or may include a volatile memory and a nonvolatile memory. The nonvolatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM), used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any memory of another proper type.

An embodiment of this application further provides a scheduling system. The system may include the control node and the N network nodes described in the method embodiment. The control node may perform the content that can be implemented by the control node and that is described in the method embodiment, and each network node may perform the content that can be implemented by the network node and that is described in the method embodiment.

An embodiment of this application further provides a computer-readable storage medium. The computer-readable storage medium stores a computer program. When the computer program is executed by a computer, the scheduling method in any one of the foregoing method embodiments is implemented.

An embodiment of this application further provides a computer program product. When the computer program product is executed by a computer, the scheduling method in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

As shown in FIG. 16, an embodiment of this application further provides a chip 1600. The chip includes an input/output interface 1601 and a logic circuit 1602. The input/output interface 1601 is configured to receive/output code instructions or information, and the logic circuit 1602 is configured to perform the scheduling method in any one of the foregoing method embodiments by executing the code instructions or based on the information.

The chip 1600 may implement functions shown by the processing unit and/or the transceiver unit in the foregoing embodiments.

A person of ordinary skill in the art may be aware that, in combination with the examples described in embodiments disclosed in this specification, units and algorithm steps can be implemented by electronic hardware, computer software, or a combination thereof. To clearly describe interchangeability between the hardware and the software, the foregoing has generally described compositions and steps of each example based on functions. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In several embodiments provided in this application, it should be understood that the disclosed apparatus and method may be implemented in other manners.

## Claims

1. A scheduling method, comprising:
receiving, by a control node, service information separately reported by N network nodes, wherein the service information indicates information about service data that needs to be transmitted by the network node on a channel, and N is a positive integer;
determining, by the control node based on the service information separately reported by the N network nodes, M network nodes to be scheduled in a current scheduling cycle, wherein M is a positive integer, and M is less than or equal to N; and
sending, by the control node, a first scheduling message to the M network nodes, wherein the first scheduling message indicates that the M network nodes are allowed to perform channel contention.

2. The method according to claim 1, wherein the method further comprises:
receiving, by the control node, first response messages separately reported by the M network nodes, wherein the first response message indicates that the network node wins a channel through contention;
determining, by the control node based on the first response messages and the service information separately reported by the N network nodes, P network nodes to be scheduled in a next scheduling cycle, wherein P is a positive integer, and P is less than or equal to N; and
sending, by the control node, a second scheduling message to the P network nodes, wherein the second scheduling message indicates that the P network nodes are allowed to perform channel contention.

3. The method according to claim 1 or 2, wherein the method further comprises:
updating, by the control node, service information of a network node in at least one of the following manners:
receiving, by the control node, second response messages separately reported by the M network nodes, wherein the second response message indicates service information for update by the network node before or after service data transmission of the current scheduling cycle is completed; and
receiving, by the control node, updated service information separately and periodically reported by the N network nodes.

4. The method according to any one of claims 1 to 3, wherein the service information comprises at least one of the following information: a service type, service traffic, a service delay, and a service priority; and
the determining, by the control node based on the service information separately reported by the N network nodes, M network nodes to be scheduled in a current scheduling cycle comprises:
if the service information separately reported by the N network nodes comprises the service type, determining priorities of the N network nodes based on the service type and a preconfigured service type priority; if the service information separately reported by the N network nodes comprises the service traffic, determining priorities of the N network nodes based on the service traffic; if the service information separately reported by the N network nodes comprises the service delay, determining priorities of the N network nodes based on the service delay; and if the service information separately reported by the N network nodes comprises the service priority, determining priorities of the N network nodes based on the service priority; and
determining, by the control node based on the priorities of the N network nodes, the M network nodes to be scheduled in the current scheduling cycle.

5. The method according to any one of claims 1 to 4, wherein before the sending, by the control node, a first scheduling message to the M network nodes, the method further comprises:
if receiving a first request message reported by a first network node, or if determining that service information of a first network node further comprises priority request information, determining, by the control node, that the first network node requests to preferentially occupy a channel, wherein the first request message or the priority request information is used to request to preferentially occupy a channel to send or receive first data; and
after receiving a first indication message reported by the first network node, performing, by the control node, scheduling in the current scheduling cycle, wherein the first indication message indicates that the first network node has sent or received the first data; or
after receiving a first indication message reported by the first network node, performing, by the control node, scheduling of a second network node in the current scheduling cycle, wherein the second network node and the first network node meet a preset condition, and the preset condition comprises the following information: the second network node and the first network node are on a same channel, and the first network node detects that signal strength of the second network node is greater than a specified threshold or the second network node detects that signal strength of the first network node is greater than the specified threshold.

6. The method according to any one of claims 1 to 5, wherein the first scheduling message comprises the following information: a network node identifier and scheduling enabling information.

7. The method according to any one of claims 1 to 6, wherein the service information or the first scheduling message is sent in one of the following manners: a customized data frame, an ethernet frame, and an optical network terminal management and control interfaceOMCI protocol frame.

8. A scheduling method, comprising:
reporting, by a network node, service information to a control node, wherein the service information indicates information about service data that needs to be transmitted by the network node on a channel;
receiving, by the network node, a first scheduling message sent by the control node, wherein the first scheduling message indicates that the network node is allowed to perform channel contention; and
performing, by the network node, channel contention based on the first scheduling message.

9. The method according to claim 8, wherein the method further comprises:
reporting, by the network node, a first response message to the control node, wherein the first response message indicates that the network node wins a channel through contention.

10. The method according to claim 8 or 9, wherein the method further comprises:
updating, by the network node, the service information to the control node in at least one of the following manners:
reporting, by the network node, a second response message to the control node, wherein the second response message indicates service information for update by the network node before or after service data transmission of a current scheduling cycle is completed; and
periodically reporting, by the network node, updated service information.

11. The method according to any one of claims 8 to 10, wherein the service information comprises at least one of the following information: a service type, service traffic, a service delay, and a service priority.

12. The method according to any one of claims 8 to 11, wherein the method further comprises:
if detecting that there is to-be-sent or to-be-received first data, reporting, by the network node, a first request message to the control node, wherein the first request message is used to request to preferentially occupy a channel to send or receive the first data; or if detecting that there is to-be-sent or to-be-received first data, comprising, by the network node, priority request information in the service information, wherein the priority request information is used to request to preferentially occupy a channel to send or receive the first data; and
after the network node has sent or received the first data, reporting a first indication message to the control node, wherein the first indication message indicates that the network node has sent or received the first data.

13. The method according to any one of claims 8 to 12, wherein the first scheduling message comprises the following information: a network node identifier and scheduling enabling information.

14. The method according to any one of claims 8 to 13, wherein the service information or the first scheduling message is sent in one of the following manners: a customized data frame, an ethernet frame, and an OMCI protocol frame.

15. A scheduling system, wherein the system comprises a control node and N network nodes, and N is a positive integer;
the N network nodes are configured to separately report service information to the control node, wherein the service information indicates information about service data that needs to be transmitted by the network node on a channel;
the control node is configured to:
receive the service information separately reported by the N network nodes;
determine, based on the service information separately reported by the N network nodes, M network nodes to be scheduled in a current scheduling cycle, wherein M is a positive integer, and M is less than or equal to N; and
send a first scheduling message to the M network nodes, wherein the first scheduling message indicates that the network node is allowed to perform channel contention; and
the M network nodes are further configured to: separately receive the first scheduling message, and perform channel contention based on the first scheduling message.

16. A scheduling apparatus, wherein the apparatus comprises a transceiver unit and a processing unit;
the transceiver unit is configured to receive service information separately reported by N network nodes, wherein the service information indicates information about service data that needs to be transmitted by the network node on a channel, and N is a positive integer;
the processing unit is configured to determine, based on the service information separately reported by the N network nodes, M network nodes to be scheduled in a current scheduling cycle, wherein M is a positive integer, and M is less than or equal to N; and
the transceiver unit is further configured to send a first scheduling message to the M network nodes, wherein the first scheduling message indicates that the M network nodes are allowed to perform channel contention.

17. The apparatus according to claim 16, wherein the transceiver unit is further configured to receive first response messages separately reported by the M network nodes, wherein the first response message indicates that the network node wins a channel through contention;
the processing unit is further configured to determine, based on the first response messages and the service information separately reported by the N network nodes, P network nodes to be scheduled in a next scheduling cycle, wherein P is a positive integer, and P is less than or equal to N; and
the transceiver unit is further configured to send a second scheduling message to the P network nodes, wherein the second scheduling message indicates that the P network nodes are allowed to perform channel contention.

18. The apparatus according to claim 16 or 17, wherein the processing unit is further configured to update service information of a network node in at least one of the following manners:
receiving, through the transceiver unit, second response messages separately reported by the M network nodes, wherein the second response message indicates service information for update by the network node before or after service data transmission of the current scheduling cycle is completed; and
receiving, through the transceiver unit, updated service information separately and periodically reported by the N network nodes.

19. The apparatus according to any one of claims 16 to 18, wherein the service information comprises at least one of the following information: a service type, service traffic, a service delay, and a service priority; and
when determining, based on the service information separately reported by the N network nodes, the M network nodes to be scheduled in the current scheduling cycle, the processing unit is specifically configured to:
if the service information separately reported by the N network nodes comprises the service type, determine priorities of the N network nodes based on the service type and a preconfigured service type priority; if the service information separately reported by the N network nodes comprises the service traffic, determine priorities of the N network nodes based on the service traffic; if the service information separately reported by the N network nodes comprises the service delay, determine priorities of the N network nodes based on the service delay; and if the service information separately reported by the N network nodes comprises the service priority, determine priorities of the N network nodes based on the service priority; and
determine, based on the priorities of the N network nodes, the M network nodes to be scheduled in the current scheduling cycle.

20. The apparatus according to any one of claims 16 to 19, wherein the transceiver unit is further configured to: before sending the first scheduling message to the M network nodes, if receiving a first request message reported by a first network node, or if determining that service information of a first network node further comprises priority request information, determining that the first network node preferentially requests to occupy a channel, wherein the first request message or the priority request information is used to request to preferentially occupy a channel to send or receive first data; and
the processing unit is further configured to: after a first indication message reported by the first network node is received, performing scheduling in the current scheduling cycle, wherein the first indication message indicates that the first network node has sent or received the first data; or
the processing unit is further configured to: after a first indication message reported by the first network node is received, performing scheduling of a second network node in the current scheduling cycle, wherein the second network node and the first network node meet a preset condition, and the preset condition comprises the following information: the second network node and the first network node are on a same channel, and the first network node detects that signal strength of the second network node is greater than a specified threshold or the second network node detects that signal strength of the first network node is greater than the specified threshold.

21. A scheduling apparatus, wherein the apparatus comprises a transceiver unit and a processing unit;
the transceiver unit is configured to report service information to a control node, wherein the service information indicates information about service data that needs to be transmitted by a network node on a channel;
the transceiver unit is further configured to receive a first scheduling message sent by the control node, wherein the first scheduling message indicates that the network node is allowed to perform channel contention; and
the processing unit is configured to perform channel contention based on the first scheduling message.

22. The apparatus according to claim 21, wherein the transceiver unit is further configured to report a first response message to the control node, wherein the first response message indicates that the network node wins a channel through contention.

23. The apparatus according to claim 21 or 22, wherein the transceiver unit is further configured to update the service information to the control node in at least one of the following manners:
reporting a second response message to the control node, wherein the second response message indicates service information for update by the network node before or after service data transmission of a current scheduling cycle is completed; and
periodically reporting updated service information.

24. The apparatus according to any one of claims 21 to 23, wherein the service information comprises at least one of the following information: a service type, service traffic, a service delay, and a service priority.

25. The apparatus according to any one of claims 21 to 24, wherein the processing unit is further configured to detect that there is to-be-sent or to-be-received first data;
the transceiver unit is further configured to report a first request message to the control node, wherein the first request message is used to request to preferentially occupy a channel to send or receive the first data; and
the transceiver unit is further configured to: after the first data has been sent or received, report a first indication message to the control node, wherein the first indication message indicates that the network node has sent or received the first data.
